# EUROPÄISCHE PATENTSCHRIFT

(11) **EP 1 197 024 B1**
(45) Veröffentlichungstag und Bekanntmachung des Hinweises auf die Patenterteilung: **06.10.2004**
(21) Anmeldenummer: 00949349.5
(22) Anmeldetag: 14.07.2000
(51) Int. Cl.: H04L 1/00, H04J 13/00

(54) **VERFAHREN UND EINRICHTUNG ZUM ERZEUGEN EINES KANAL- UND TEILNEHMERCODIERTEN NACHRICHTENSIGNALS**
METHOD AND DEVICE FOR GENERATING A CHANNEL AND SUBSCRIBER-CODED MESSAGE SIGNAL
PROCEDE ET DISPOSITIF POUR PRODUIRE UN SIGNAL D'INFORMATION A CODAGE DE VOIE ET D'ABONNE

(30) Priorität: 16.07.1999 DE 19933489
(43) Veröffentlichungstag der Anmeldung: 17.04.2002
(73) Patentinhaber: Infineon Technologies AG, 81669 München (DE)
(72) Erfinder: DOETSCH, Markus, D-56072 Koblenz-Rübenach (DE); JUNG, Peter, D-67697 Otterberg (DE); PLECHINGER, Jörg, D-80469 München (DE); SCHMIDT, Peter, D-82008 Unterhaching (DE); SCHNEIDER, Michael, D-56823 Büchel (DE)
(74) Vertreter: Lange, Thomas, Dr.
(86) Internationale Anmeldenummer: PCT/EP2000/006751
(87) Internationale Veröffentlichungsnummer: WO 2001/006693

(56) Entgegenhaltungen:
- WO-A-98/10568
- US-A- 5 321 721
- US-A- 5 345 469
- US-A- 5 771 288
- BICKEL M; GRANZOW W;SCHRAMM P: "Optimization of code rate and spreading factor for direct-sequence CDMA systems" IEEE1996, PROCEEDINGS OF 4TH INTERNATIONAL SYMPOSIUM ON SPREAD SPECTRUM TECHNIQUES AND APPLICATIONS., Bd. 2, 22. - 25. September 1996, Seiten 585-589, XP002152611
- ZHONG YE; SAULNIER G.J.; LEE D; MEDLEY M.J.: "A rate adaptive coded OFDM (RA-OFDM) spread spectrum system for tactical radio networks." COMMUNICATION THEORY MINI-CONFERENCE 1999, 6. - 10. Juni 1999, Seiten 67-71, XP002152612
- PATENT ABSTRACTS OF JAPAN vol. 018, no. 560 (E-1621), 26. Oktober 1994 (1994-10-26) & JP 06 204969 A (JAPAN AVIATION ELECTRON IND LTD), 22. Juli 1994 (1994-07-22)
- FREY T ; BOSSERT M : "A first approach to concatenation of coding and spreading for CDMA systems." 1996 IEEE 4TH INTERNATIONAL SYMPOSIUM ON SPREAD SPECTRUM TECHNIQUES AND APPLICATIONS PROCEEDINGS., Bd. 2, 22. - 25. September 1996, XP002152613 Mainz, Germany

## Beschreibung

Die Erfindung betrifft ein Verfahren und eine Einrichtung zum Erzeugen eines kanal- und teilnehmercodierten Nachrichtensignals in einem Sender, insbesondere Mobilfunksender, das zur Übertragung einer Nachricht über einen Kanal, insbesondere Funkkanäl, vorgesehen ist.

In Mehrteilnehmerkommunikationssystemen ist es erforderlich, eine über den Kanal zu übertragende Nachricht im Sender so aufzubereiten, daß sie gegen Störungen geschützt ist und eine Teilnehmerseparierung ermöglicht wird.

Der Schutz der Nachricht gegen Störungen wird durch eine Kanalcodierung (wird auch als Fehlerschutzcodierung bezeichnet) erreicht. Bei der Kanalcodierung wird in die zu übertragende Nachricht Redundanz eingebaut. Mit zunehmender Redundanz wird die Störfestigkeit der Nachrichtenübertragung erhöht. Nachteilig ist jedoch, daß dabei auch der für die Übertragung der Nachricht benötigte Frequenzbereich zunimmt, d.h. eine Bandspreizung auftritt.

Die Teilnehmerseparierung kann ebenfalls durch eine Codierung der Nachricht erreicht werden. Eine derartige teilnehmerspezifische Codierung wird im folgenden auch als Teilnehmercodierung bezeichnet. Sie dient dazu, Nachrichtensignale von mehreren Teilnehmern in den jeweiligen Empfängern voneinander trennen zu können, obwohl diese Signale gleichzeitig im selben Frequenzband koexistieren. Im Vergleich zu anderen Vielfachzugriffsverfahren wie TDMA (Time Division Multiple Access), FDMA (Freqüency Division Multiple Access) oder SDMA (Space Division Multiple Access) weist das Verfahren der Teilnehmercodierung eine höhere Flexibilität auf, da die Teilnehmercodes in einfacher Weise vergebbar und austauschbar sind.

Ein bekanntes Verfahren der Teilnehmercodierung ist CDMA (Code Division Multiple Access). Bei CDMA wird eine Teilnehmercodierung durch Aufprägen eines CDMA-Codes auf jedes Datensymbol eines Nachrichtensignals erzeugt. Die CDMA-Teilnehmercodierung bewirkt ebenfalls eine Bandspreizung des Nachrichtensignals und wird deshalb auch als CDMA-Spreizcodierung bezeichnet.

Bisher wurden Fehlerschutzcodierung und Teilnehmercodierung getrennt voneinander betrachtet. Dies gilt insbesondere für das derzeit in der Standardisierung befindliche TD/CDMA (Time Divided Code Division Multiple Access) System, das mit dem UTRA (UMTS Terrestrial Radio Access) TDD (Time Domaine Duplexing) Modus identisch ist. UMTS steht dabei für Universal Mobile Telecommunications Systems und repräsentiert den Mobilfunkstandard der dritten Generation.

In der Veröffentlichung "Combined Coding and Spreading in CDMA-Systems using Maximum Free Distance Convolutional Codes" von P. Frenger et al. in "Proc. of the IEEE Vehicular Technology Conference", (VTC 1998), S. 2497 - 2501, 1998 ist ein Codierer beschrieben, der sowohl eine Kanalcodierung als auch eine Teilnehmercodierung durchführt. Die Teilnehmercodierung wird dadurch erreicht, da**ß** Ausgänge von verschiedenen Generatoren des Fehlerschutzcodierers von einem Selektor sequentiell und gegebenenfalls mehrfach angewählt werden. Dadurch wird eine nicht zur Bandspreizung beitragende "Signature Sequenz". erzeugt, die bei der Detektion zur Auseinahderhaltung von unterschiedlichen Teilnehmersignalen herangezogen wird.

In der Schrift U.S. 5,321,721 wird die Taktfrequenz eines PN-Spreizcodieres erhöht, sobald die Übertragungsqualität verbessert werden soll. Die Wirkungsweise basiert darauf, dass längere PN-Sequenzen eine bessere Teilnehmerseparation ermöglichen. Die Hammingdistanz des Gesamtcode, welcher sich aus dem von dem Kanalcode und dem Teilnehmercode (PN-Spreizcode) ergibt, wird als Auswahlkriterium nicht berücksichtigt.

In der Veröffentlichung "Optimization of Code Rate and Spreading Factor for Direct-Sequence CDMA Systems", von M. Bickel et al., IEBE1996, Proceedings of the 4^{th} International Symposium on Spread Spectrum Techniques and Applications, Bd. 2, 22.-25. September 1996, Seiten 585-589, wird die Variation der Coderate der Kanalcodierung und des Spreizfaktors eines PN-Spreizcodes bei Vorgabe eines festen "processing gain" (die durch Kanalcodierung und PN-Codierung erhaltene Gesamtbandbreitenexpansion) untersucht. Der benötigte PN-Code (genauer: sein Spreizfaktor) ergibt sich dabei aufgrund der genannten Zwangsbedingung (feste Gesamtbandbreitenexpansion) direkt aus der Coderate.

In dem Artikel "A Rate-Adaptive Coded OFDM (RA-OFDM) Spread Spectrum System for Tactical Radio Networks" von Z. Ye et al., Communication Theory Mini-Conference 1999, 6.-10. Juni 1999, Seiten 67-71, wird ebenfalls der Trade-Off zwischen der Coderate eines Kanalcodes und dem Spreizfaktor eines Teilnemercodes bei gegebener Gesamtbandbreitenexpansion betrachten. Die Teilnehmercodierung wird entweder durch einen OFDM-SS-Code (gespreizt) oder durch einen OFDM-Code (ungespreizt) bewerkstelligt.

In der Schrift "A First Approach to Concatenation of Coding and Spreading for CDMA-Systems", von T. Frey et al., 1996 IEEE 4^{th} International Symposium on Spread Spectrum Techniques and Applications Proceedings, Bd. 2, 22.-25. September 1996, Seiten 667-671, wird eine Informationssequenz mit einem Kanalcode C(n,k,d) und einem PN-Teilnehmercode codiert. Die Signalspreizung wird allein von dem Känalcode bewerkstelligt, welcher für alle Teilnehmer der gleiche ist, die PN-Teilnehmercodierung trägt nicht zur Bandspreizung bei. Die Wahl bestimmter PN-Teilnehmercodes wird nicht betrachtet.

Der Erfindung liegt die Aufgabe zugrunde, ein Verfahren zum Erzeugen eines kanal- und teilnehmercodierten Nachrichtensignals anzugeben, das bei einer möglichst geringen Bandspreizung des Nachrichtensignals eine möglichst gute Fehlersicherung der zu übertragenen Nachricht ermöglicht. Ferner zielt die Erfindung darauf ab, eine Einrichtung zum Erzeugen eines derartigen kanal- und teilnehmercodierten Nachrichtensignals für einen Sender, insbesondere Mobilfunksender zu schaffen.

Zur Lösung der Aufgabenstellung sind die Merkmale der Ansprüche 1 und 7 vorgesehen.

Erfindungsgemäß wird der für die Übertragung heranzuziehende als CDMA-Spreizcode ausgeführte Teilnehmercode nicht mehr nur allein unter dem Gesichtspunkt einer möglichst flexiblen und einfachen Handhabung des Vielfachzugriffs, sondern auch unter dem Gesichtspunkt des Fehlerschutzes des zu übertragenen Nachrichtensignals ausgewählt. Dadurch wird die herkömmliche Trennung zwischen Kanalcodierung (zum Zwecke des Fehlerschutzes) und Teilnehmercodierung (zum Zwecke der Teilnehmerseparierung) aufgehoben. Im Ergebnis kann ein Teilnehmerseparierung ermöglichender Gesamtcode mit guten Fehlersicherungseigenschaften und einer geringen Bandspreizung erhalten werden. Dabei wird derjenige Teilnehmercode aus den verfügbaren Teilnehmercodes ausgewählt, welcher einem aus dem Kanalcode und dem ausgewählten Teilnehmercode gebildeten Gesamtcode zugeordnet ist, wobei der Gesamtcode eine maximale Hammingdistanz aufweist. Als Hammingdistanz wird der Minimalabstand zwischen zwei (beliebigen) Codewörtern bezeichnet. Je höher die Hammingdistanz, desto sicherer und damit fehlertoleranter kann die Decodierung des Gesamtcodes im Empfänger durchgeführt werden.

Die Auswahl des bestimmten Teilnehmercodes kann auch in Abhängigkeit von dem eingesetzten Kanalcode erfolgen.

Sofern der Kanalcodierer Kanalcodes mit variabler Coderate R erzeugt, kann die Coderate R als Auswahlparameter eingesetzt werden.

Es kann auch ein Kanalcodierer eingesetzt werden, der unterschiedliche Codearten, insbesondere Blockcodes, Faltungscodes, parallel oder seriell verkettete Faltungs- und/oder Blockcodes und insbesondere Turbo-Codes erzeugen kann. In diesem Fall kann sich die Auswahl des Teilnehmercodes nach der Art des eingesetzten Kanalcodes richten.

Eine weitere vorteilhafte Maßnahme besteht darin, daß die Auswahl des bestimmten Teilnehmercodes in Abhängigkeit von dem zu übertragenden Dienst erfolgt.

Als Teilnehmercodierung kann beispielsweise eine DS-(Direct Sequencing) CDMA-Spreizcodierung, eine MC-(Multicarrier) CDMA-Spreizcodierung oder auch eine FH- (Frequency Hopping) CDMA-Spreizcodierung eingesetzt werden.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung näher erläutert; in dieser zeigt:
- Figur 1: eine schematische Darstellung der Luftschnittstelle eines Mobilfunksystems mit Sender und Empfänger;
- Figur 2: eine schematische Darstellung zur Erläuterung der Bandspreizung bei einer Kanal- und Teilnehmercodierung;
- Figur 3: eine Darstellung zur Erläuterung der Bandspreizung bei DS-CDMA und MC-CDMA;
- Figur 4: ein Blockschaltbild eines Senders mit einer Codiereinrichtung nach einem Ausführungsbeispiel der vorliegenden Erfindung; und
- Figur 5: ein Blockschaltbild eines Kanalcodierers mit variabler Coderate.

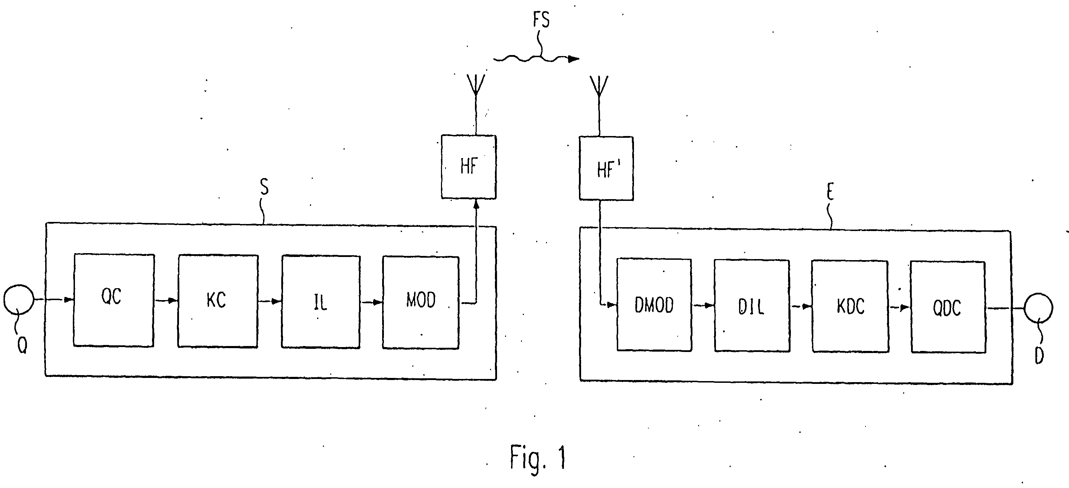

Figur 1 zeigt einen Sender S und einen Empfänger E eines Mobilfunksystems. Der Sender S bzw. der Empfänger E können sowohl einer Basisstation als auch einer Mobilstation eines insbesondere zellularen Mobilfunksystems zugeordnet sein.

Eine Nachrichtenquelle Q, beispielsweise Mikrofon, Kamera, usw., erzeugt eine zu übertragende Nachricht. Die zu übertragende Nachricht kann sowohl in Form eines Analogsignals (beispielsweise Sprach-, Musik-, Videosignal) als auch in Form eines digitalen Signals (beispielsweise Speicherinhalt eines digitaleh Sprach-, Musik-, Bildspeichers) vorliegen. Die Nachricht wird sodann einem Quellencodierer QC zugeführt, wobei im erstgenannten Fall (analoges Nachrichtensignal) zuvor eine Analog-Digital-Umsetzung des Nachrichtensignals vorgenommen wird. Der Quellencodierer QC setzt das empfangene digitale Nachrichtensignal in ein digitales Signal mit geringerer Redundanz um. Er bewirkt somit eine Informationsverdichtung oder Datenkompression, die ermöglicht, daß die nachfolgende Datenverarbeitung und -übertragung grundsätzlich mit einer niedrigeren Datenrate erfolgen kann.

Ist eine paketvermittelte Datenübertragung vorgesehen, wird in dem Quellencodierer QC ferner eine Einteilung der Nachrichtendaten in einzelne Datenpakete vorgenommen.

Ein Kanalcodierer KC nimmt die quellencodierten Nachrichtendaten entgegen und führt in noch näher zu beschreibender Weise eine an den Übertragungskanal angepaßte Kanalcodierung durch.

Ein dem Kanalcodierer KC nachgeschalteter optionaler Verschachteler IL hat ebenfalls eine Verbesserung der Fehlersicherheit der empfangenen Nachricht zum Ziel. Durch die senderseitige Verschachtelung des zu übertragenden, kanalcodierten Nachrichtensignals wird bei der Decodierung im Empfänger die statistische Unabhängigkeit auftretender Detektionsfehler erhöht.

Dem Verschachteler IL ist ein Modulator MOD nachgeschaltet, der in nicht näher dargestellter Weise einen Blockbildner, einen Spreizcodierer und die eigentliche Modulatorstufe enthält. Ein von dem Modulator MOD ausgegebenes Basisbandsignal wird in einer Hochfrequenzstufe HF einem hochfrequenten Träger aufmoduliert und mittels einer Antenne als Funksignal FS abgestrahlt.

Das Funksignal FS wird über die Luftschnittstelle übertragen und von dem Empfänger E empfangen. Gleichzeitig empfängt der Empfänger E auch Funksignale, die von anderen Sendern des Mehrteilnehmerkommunikationssystems gesendet werden.

Die empfangenen Nachrichtensignale werden in einer Hochfrequenzstufe HF' in das Basisband umgesetzt. Das von der Hochfrequenzstufe HF' ausgegebene Basisbandsignal wird einem Demodulator DMOD zugeführt. Der Demodulator DMOD umfaßt in nicht näher dargestellter Weise einen Analog-zu-Digital-Umsetzer, einen Spreizdecodierer und einen adaptiven, kohärenten Datendetektor.

Dem Spreizdecodierer ist der von dem hier betrachteten Sender S verwendete Spreizcode (Teilnehmercode) bekannt bzw. es wird ihm bei einer Änderung desselben der aktuelle Spreizcode mitgeteilt. Durch Korrelation des (sämtliche empfangenen Nachrichtensignale enthaltenden) Basisbandsignals mit dem senderseitig verwendeten Spreizcode führt der Spreizdecodierer eine Teilnehmerseparierung durch, d.h. gewinnt aus dem Basisbandsignal den auf den Sender S zurückgehenden Signalanteil zurück.

Der adaptive kohirehte Datendetektor führt dann eine an den momentanen Zustand des Übertragungskanals (Luftschnittstelle) angepaßte Detektion des von dem Sender S stammenden, übertragenen Nachrichtensignals unter Berücksichtigung des Betrags und der Phase der Empfangsfeldstärke desselben durch. An seinem Ausgang stellt der Demodulator DMOD eine Datensymbolfolge bereit, die eine Rekonstruktion der von dem Modulator MOD im Sender S entgegengenommenen Datensymbolfolge ist.

Es kann auch eine Mehrteilnehmerdetektion vorgesehen sein, bei der der Datendetektor mehrere Teilnehmersignale detektiert, wodurch auf andere Teilnehmersignale zurückgehende (deterministische) Störungsanteile im interessierenden Teilnehmersignal eliminiert werden können.

Die von dem Demodulator DMOD ausgegebene Datensymbolfolge wird von einem (optionalen) Entschachteler DIL wieder in die richtige Reihenfolge gebracht (d.h. die von dem Verschachteler IL bewirkte Datensymbol-Verschachtelung wird rückgängig gemacht) und einem Kanaldecodierer KDC zugeleitet. Der Kanaldecodierer KDC führt eine Decodierung der detektierten, codierten Datensymbole gemäß dem in dem Kanalcodierer KC verwendeten Kanalcode durch. Hierzu ist dem Kanaldecodierer KDC der im Sender S verwendete Kanalcode bekannt bzw. es wird ihm bei Änderungen desselben der aktuelle Kanälcode mitgeteilt.

Um das Arbeiten des Kanaldecodierers KDC zu unterstützen und die Anzahl der korrigierbaren Detektionsfehler zu erhöhen, kann vom adaptiven kohärenten Datendetektor zu jedem detektierten Datensymbol eine Zuverlässigkeitsinformation erzeugt und dem Kanaldecodierer KDC mitgeteilt werden (sogenannte "soft decision").

Der Kanaldecodierer KDC erzeugt eine Datensymbolfolge, deren Datensymbole Rekonstruktionen der Datensymbole sind, die von dem Kanalcodierer KC des Senders S entgegengenommen werden.

Ein Datensymbol wird entweder falsch oder richtig rekonstruiert. Die Bitfehlerrate gibt die relative Häufigkeit falsch rekonstruierter Datensymbole an.

Die von dem Kanaldecodierer KDC decodierten Datensymbole werden in einem Quellendecodierer QDC quellendecodiert, gegebenenfalls in ein analoges Datensignal gewandelt und einer geeigneten Nachrichtensenke D (Lautsprecher, Display, usw.) zugeführt.

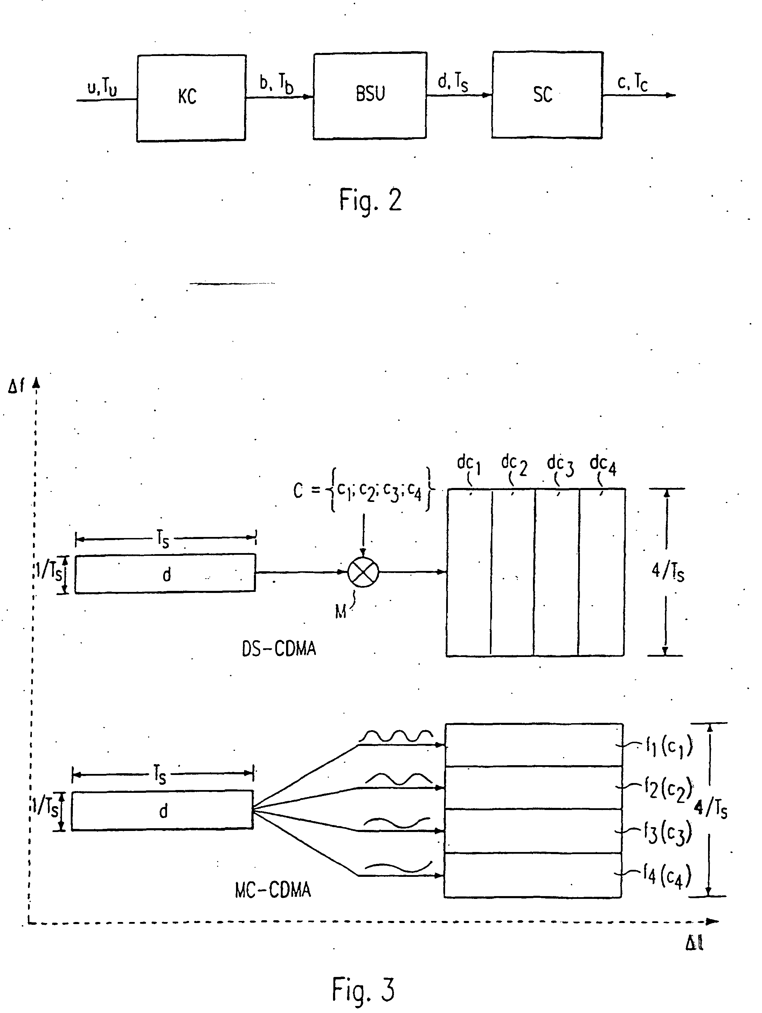

Anhand der Figur 2 wird die im Sender S durch die Kanal- und Spreizcodierung erzeugte Bandspreizung des auszusendenden Nachrichtensignals erläutert. Das dem Kanalcodierer KC zugeführte quellencodierte digitale Nachrichtensignal besteht aus einer Folge von Bits u. Die Dauer eines Bits u ist Tᵤ. Der Kanalcodierer KC fügt der Folge von Bits u Redundanz hinzu und gibt eine Folge von Bits b der Bitdauer T_{b} aus. Die Coderate R des Kanalcodierers KC ist in üblicher Weise als das Verhältnis k/n definiert, wobei n die Anzahl der Bits b ist, die am Ausgang des Kanalcodierers KC in Antwort auf k in den Kanalcodierer KC eingegebene Bits u (durch Hinzufügen von r Reduhdanzbits) bereitgestellt wird, d.h. n = k + r. Demzufolge gilt: R = T_{b}/Tᵤ. Typischerweise liegt die Coderate R zwischen 1/3 und 1. Die Bandbreite des Nachrichtensignals wird im Kanalcodierer KC von 1/Tᵤ auf 1/T_{b} erweitert, d.h. "gespreizt".

Die im Ausgangssignal des Kanalcodierers KC enthaltenen Bits b werden anschließend in einem (optionalen) Bit-zu-Symbol-Umsetzer BSU auf mehrvalente Datensymbole d abgebildet. Jedes Datensymbol d weist eine Symboldauer von Tₛ auf. Es gilt Tₛ ≥ T_{b}.

Die Datensymbole d werden schließlich in dem Spreizcodierer SC des Modulators MOD spreizmoduliert. Im Falle von DS-CDMA wird jedes Datensymbol mit einem individuellen CDMA-Spreizcode (Teilnehmercode) der Länge L multipliziert. Die dabei erzeugten Chips c weisen die Chipdauer T_{c} auf.

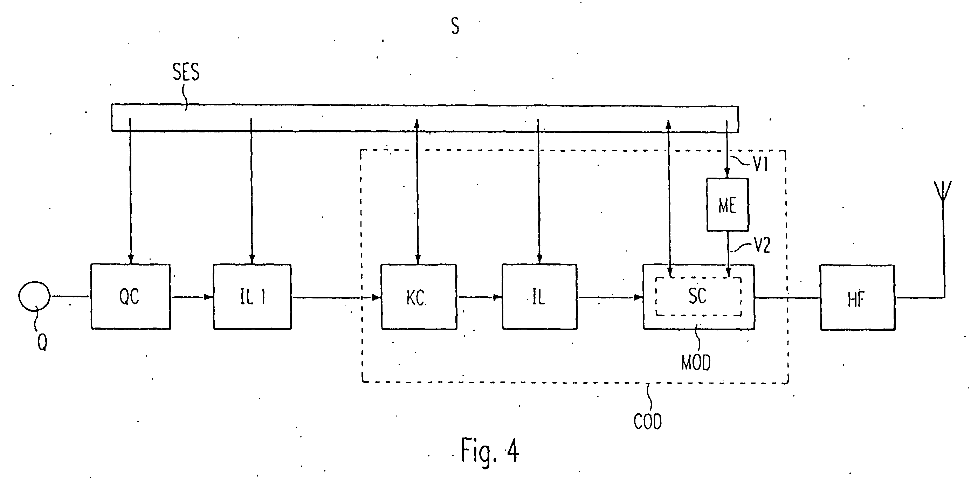

Die in Figur 2 dargestellte Kombination aus Känalcodierer KC und Spreizcodierer SC kann sowohl gedanklich als auch konstruktiv zu einer (Gesamt-)Codiereinrichtung COD (siehe auch Figur 4) zusammengefaßt werden. Der Einfachheit halber wird im folgenden angenommen, daß der Bit-zu-Symbol-Umsetzer BSU nicht vorhanden ist, d.h. b = d und T_{b} = Tₛ. Für die Coderate R_{c} der erfindungsgemäßen Codiereinrichtung COD gilt dann R_{c} = T_{c}/Tᵤ = k/nL. Die Coderate R_{c} der Codiereinrichtung COD wird also sowohl von der Coderate R des Kanalcodierers KC als auch von der Länge L des verwendeten CDMA-Spreizcodes beeinflußt.

Figur 3 veranschaulicht zwei spezielle Formen der CDMA-Spreizcodierung, nämlich DS-CDMA (obere Darstellung in, Figur 3) und MC-CDMA (untere Darstellung in Figur 3). Die Vertikalachse repräsentiert dabei die Bandspreizung Δf im Frequenzbereich und die Horizontalachse repräsentiert die Zeitdauer Δt.

Bei DS-CDMA wird ein Datensymbol d in einem Multiplizierer M mit einem teilnehmerspezifischen CDMA-Spreizcode C bestehend beispielsweise aus L = 4 Codeelementen c₁, c₂, c₃, c₄ jeweils der Chipdauer T_{c} multipliziert. Die sich ergebende spreizcodierte (d.h. teilnehmercodierte) Datenfolge besteht aus vier Chips dc₁, dc₂, dc₃, dc₄ und weist eine Frequenzbreite von 4/Tₛ auf.

Bei MC-CDMA wird das Datensymbol d unter Verwendung des vorstehenden CDMA-Spreizcodes C auf vier den einzelnen Codeelementen c₁, c₂, c₃, c₄ jeweils zugeordneten schmalbandigen, disjunkten Frequenzbändern f₁, f₂, f₃ bzw. f₄ übertragen. Die Frequenzbänder f₁, f₂, f₃ und f₄ können diskontinuierlich im Frequenzbereich verteilt sein. Die resultierende Bandspreizung ist wiederum 4/Tₛ, d.h. aligmeien L/Tₛ bei Zugrundelegung eines CDMA-Spreizcodes der Länge L.

Figur 4 zeigt den in Figur 1 dargestellten Sender S in größerem Detail. Es wird deutlich, daß der Quellencodierer QC, der Kanalcodierers KC, der Verschachteler IL und der in dem Modulator MOD enthaltene Spreizcodierer SC von einer zentralen Steuereinheit SES des Senders S gesteuert werden. Mit der Steuereinheit SES steht ferner ein weiterer Verschachteler IL1 in Verbindung, der im Signalweg zwischen dem Quellencodierer QC und der Codiereinrichtung COD angeordnet ist. In einem Speicher ME, beispielsweise einem ROM, sind verschiedene CDMA-Spreizcodes gespeichert. Über eine Verbindung V1 mit der Steuereinheit SES kann ein bestimmter CDMA-Spreizcode ausgewählt und zur teilnehmerspezifischen Spreizcodierung des Nachrichtensignals über eine Datenverbindung V2 in den Modulator MOD heruntergeladen werden.

Bei der Auswahl des bestimmten Spreizcodes können verschiedene Einflußgrößen Berücksichtigung finden.

Zunächst ist zu beachten, daß ein noch "freier" CDMA-Spreizcode verwendet wird, der aktuell von keinem anderen in dem gleichen räumlichen Gebiet kommunizierenden Teilnehmer eingesetzt wird. Zu diesem Zweck kann der Empfänger E (z.B. eine Basisstation) dem Sender S gegebenenfalls eine "Vorschlagsliste" aller zur Zeit freien CDMA-Spreizcodes mitteilen. Auch andere mit der Handhabung des Vielfachzugriffs im Zusammenhang stehende Aspekte können dem Sender S mitgeteilt werden und bei der späteren Codevergabe berücksichtigt werden.

Erfindungsgemäß wird bei der Auswahl des bestimmten CDMA-Spreizcodes aber auch der Fehlerschutzgrad des von der Codiereinrichtung COD ausgegebenen codierten Nachrichtensignals berücksichtigt. Dem liegt zugrunde, daß eine Kombination eines in Hinblick auf die Kanalübertragung optimierten Kanalcodes mit einem in Hinblick auf die Teilnehmerseparierung optimierten Spreizcode nicht notwendigerweise einen "Gesamtcode" mit optimalen Fehlerschutzeigenschaften (d.h. z.B. ein optimales Bitfehlerverhältnis im Empfänger E) herbeiführt. Die Erfindung ermöglicht, den durch Kanal- urid Spreizcodierung erzeugten Gesamtcode durch eine gezielte Wahl des CDMA-Spreizcodes so zu optimieren, daß ein besserer Empfang am Empfänger E erreicht wird.

Die Auswahl eines geeigneten CDMA-Spreizcodes durch die zentrale Steuereinheit SES kann beispielsweise folgendermaßen getroffen werden:

Sofern in dem Kanalcodierer KC, wie noch im folgenden näher erläutert, unterschiedliche Kanalcodes erzeugt werden können, kann jedem Codepaar (Kanalcode, CDMA-Spreizcode) eine Bewertungsziffer zugeordnet sein, die den Fehlerschutzgrad des von dem Codepaar erzeugten Gesamtcodes angibt. (Die jeweiligen Bewertungsziffern können zuvor durch Simulationsrechnungen ermittelt und der Steuereinheit SES herstellerseitig eingegeben sein). Dann kann beim Aufbau einer Kommunikationsverbindung dasjenige Codepaar (Kanalcode, CDMA-Spreizcode) ausgewählt werden, das bei Vernachlässigung jener Codepaare, die aufgrund von Vielfachzugriffs-Beschränkungen nicht in Frage kommen, die höchste Bewertungsziffer aufweist.

Falls der Kanalcode fest vorgegeben ist, kann in analoger Weise verfahren werden. Es wird dann einfach der (mögliche). CDMA-Spreizcode ausgewählt, dessen Bewertungsziffer - berechnet bezüglich des vorgegebenen Kanalcodes - maximal ist.

Anstelle einer durch Simulationsrechnung bestimmten Bewertungsziffer kann der Auswahl des bestimmten CDMA-Spreizcodes bzw. des Codepaars auch die Hammingdistanz des Gesamtcodes zugrunde liegen, d.h. ein CDMA-Spreizcode ausgewählt werden, der einen Gesamtcode mit maximaler Hammingdistanz erzeugt.

Schließlich ist die Auswahl des CDMA-Spreizcodes bzw. des Codepaars (Kanalcode, CDMA-Spreizcode) so zu treffen, daß entweder eine möglichst geringe Bandspreizung erhalten oder eine vorgegebene, maximal zulässige Bandspreizung eingehalten wird.

Nach einer Auswahl des bestimmten CDMA-Spreizcodes bzw. eines Codepaars (Kanalcode, CDMA-Spreizcode) muß der ausgewählte CDMA-Spreizcode bzw. das ausgewählte Codepaar noch dem Empfänger E mitgeteilt werden, damit eine Decodierung des codierten gesendeten Nachrichtensignals im Empfänger E möglich wird.

Es ist auch möglich, daß bei der Auswahl des CDMA-Spreizcodes bzw. des Codepaars ein von dem Empfänger E ausgesendetes Rückmeldesignal als Einflußgröße berücksichtigt wird. Im Empfänger E kann der durch die Codierung erreichte Fehlerschutzgrad anhand der sich ergebenen Übertragungsqualität direkt ermittelt werden. Beispielsweise kann im Empfänger E durch einen einfachen Parity-check die fehlerhafte Übertragung eines empfangenen Datenblocks oder Datenpakets festgestellt oder durch eine Berechnung der Varianz der den empfangenen Datensymbolen zugeordneten Zuverlässigkeitsinformation die Bitfehlerrate geschätzt werden. Ein Rückmeldesignal, das Information über die geschätzte Bitfehlerrate und/oder Fehlerzustandsinformation enthält, kann dann im Sender S bei der Auswahl des bestimmten CDMA-Spreizcodes bzw. Codepaars berücksichtigt werden. Treten im Laufe einer Kommunikation kritische Übertragungsverhältnisse ein, kann durch einen Wechsel des CDMA-Spreizcodes bzw. des Codepaars eine Verbesserung oder zumindest eine Aufrechterhaltung der Kommunikationsverbindung erreicht werden.

Ferner ist möglich, daß die Auswahl des bestimmten CDMA-Spreizcodes oder des Codepaars in dem Empfänger E erfolgt und dem Sender S in Form einer Codevergabeanweisung mitgeteilt wird.

Bei der Wahl des bestimmten CDMA-Spreizcodes oder Codepaars können u.a. auch die folgenden Einflußgrößen berücksichtigt werden:
- der Quellencode des Quellencodierers QC, sofern eine variable Quellencodierung vorgesehen ist,
- die Verschachtelungstiefe und Verschachtelungsart (Blockverschachtelung, Faltungsverschachtelung), sofern ein Verschachteler IL1 oder IL mit variabler Verschachtelungstiefe/Verschachtelungsart vorgesehen ist,
- beim Kanalcode (bereits erwähnt) insbesondere die Coderate R und die Codeart, sofern ein Kanalcodierer KC mit variabler Coderate und/oder variabler Codeart vorgesehen ist,
- der aktuelle Dienst (Service), sofern - wie üblich - eine Vielzahl von Diensten angeboten wird (beispielsweise beträgt die maximal erlaubte Bitfehlerrate bei Sprachdiensten etwa 10⁻³ und bei Datendiensten 10⁻⁶).

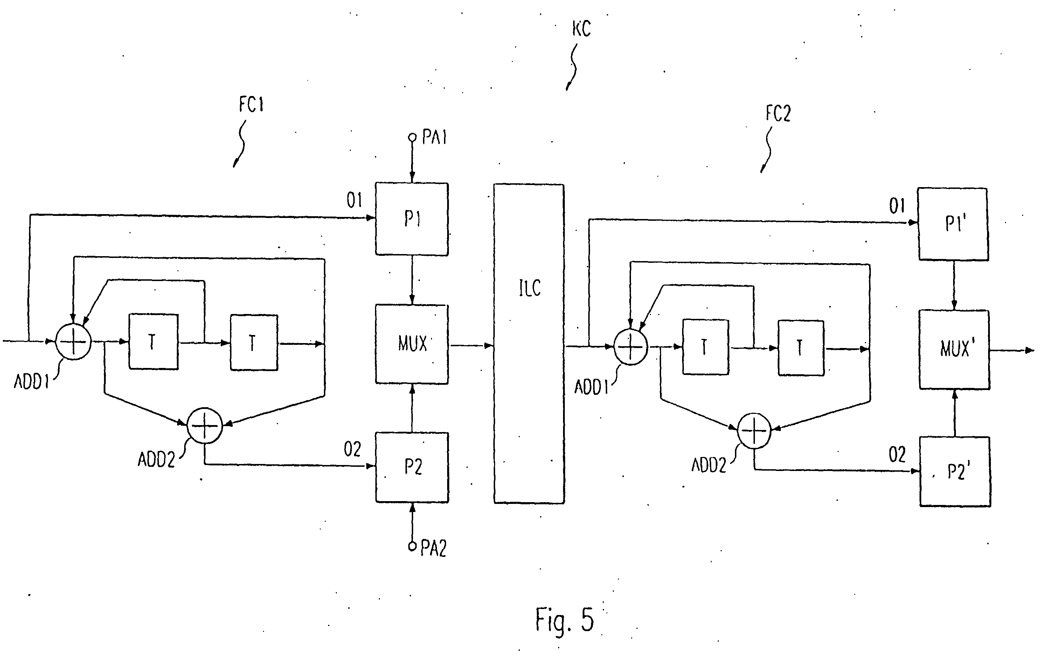

Figur 5 zeigt ein spezielles Beispiel eines im Rahmen der Erfindung einsetzbaren Kanalcodierers KC mit variabler Coderate R.

Der Kanalcodierer KC umfaßt einen ersten rekursiven systematischen Falturigscodierer FC1, eine Coderaten-Erhöhungsstufe, die aus zwei Punktierern P1, P2 und einem Multiplexer MUX aufgebaut ist, einen der Coderaten-Erhöhungsstufe P1/P2/MUX nachgeschalteten Verschachteler ILC, einen zweiten rekursiven systematischen Faltungscodierer FC2 und eine weitere Coderaten-Erhöhungsstufe P1'/P2'/MUX', die konstruktiv identisch mit der ersten Coderaten-Erhöhungsstufe P1/P2/MUX ausgebildet sein kann.

Jeder Faltungscodierer FC1, FC2 weist eingangsseitig einen ersten Addierer ADD1 und ein dem ersten Addierer ADD1 nachgeschaltetes Schieberegister mit zwei Speicherzellen T auf. Die Faltungscodierer FC1, FC2 weisen jeweils einen ersten Ausgang O1 auf, an dem eine Binärfolge ausgegeben wird, deren Elemente (Bits) identisch mit den ursprünglich empfangenen Datenbits u sind. Codierer mit dieser Eigenschaft werden als systematische Codierer bezeichnet. An einem zweiten Ausgang 02 stellt der Faltungscodierer FC1 bzw. FC2 eine Redundanz-Binärdatenfolge bereit, die von einem zweiten Addierer ADD2 gebildet wird. Es wird deutlich, daß ein zu einem bestimmten Zeitpunkt an dem zweiten Ausgang O2 vorliegendes Redundanzbit von dem Eingangsbit u sowie den in den zwei Speicherzellen T gespeicherten vorhergehenden Bits u abhängig ist. Die Faltungscodierer FC1, FC2 besitzen daher die Rückgrifftiefe 3.

Da pro Eingangsbit u genau ein Redundanzbit erzeugt wird, beträgt die Coderate des ersten Faltungscodierers FC1 sowie auch die Coderate des zweiten Faltungscodierers FC2 jeweils 0,5.

Der Punktierer P1 nimmt die an dem Ausgang Ol bereitgestellte systematische Bitfolge (Eingangsbits u) entgegen. Die am Ausgang 02 des ersten Faltungscodierers FC1 bereitgestellte Redundanz-Bitfolge wird dem zweiten Punktierer P2 zugeführt. Beide Punktierer P1, P2 weisen einen Steuereingang auf, der mit der Steuereinheit SES des Senders S, wie in Figur 4 dargestellt, in Verbindung steht. Über diesen Steuereingang wird den Punktierern P1 bzw. P2 eine von der Steuereinheit SES ausgegebene Punktieranweisung PA1 bzw. PA2 mitgeteilt. Die Punktieranweisung PA1 bzw. PA2 gibt jeweils ein Punktiermuster an, gemäß dem die den jeweiligen Punktierer durchlaufende systematische bzw. Redundanz-Bitfolge zu punktieren ist.

Beispielsweise kann das Punktiermuster "xx0xx0xx0xx0..." lauten. Dabei bedeutet x "punktieren" und 0 bedeutet "nicht punktieren". Bei einer solchen Punktieranweisung PA1 bzw. PA2 werden demnach immer zwei Datensymbole punktiert, d.h. aus der Bitfolge eliminiert, und eines weitergeleitet.

Die von den Punktierern P1, P2 weitergeleiteten und in dem Multiplexer MUX multiplexierten Bits werden nach einer blockweisen oder konvolutionalen Verschachtelung im Verschachteler ILC, wie bereits beschrieben, dem zweiten Faltungscodierer FC2 zugeführt und dort in gleicher Weise wie in dem ersten Faltungscodierer FC1 weiterverarbeitet. Das kanalcodierte Nachrichtensignal steht am Ausgang des zweiten Multiplexers MUX' zur Verfügung.

Die mit dem Kanalcodierer KC minimal erzielbare Coderate R beträgt 1/4. Durch die Ansteuerung der Punktierer P1 bzw. P2 (und in nicht dargestellter Weise gegebenenfalls auch P1' und P2') kann die Coderate R des Kanalcodierers KC nach Wunsch variiert werden. Eine andere Möglichkeit, den im Kanalcodierer KC erzeugten Kanalcode variabel zu gestalten, besteht darin, die Codeart des Codierers zu ändern. Der in Figur 5 dargestellte Kanalcodierer erzeugt einen seriell verketteten Faltungscode. Werden anstelle der Faltungscodierer FC1, FC2 Blockcodierer eingesetzt, wird ein seriell verketteter Blockcode erzeugt. In analoger Weise können parallel verkettete Codes (Faltungscodes, Blockcodes oder Kombinationen derselben) erzeugt werden. Durch einen modularen Aufbau eines Kanalcodierers mit entsprechenden Umschaltmöglichkeiten wird eine große Anzahl verschiedener Codearten realisierbar, die dann ebenfalls von der Steuereinheit SES nach Wunsch einstellbar sind.

Zusammenfassend ist festzustellen, daß erfindungsgemäß der durch die Auswahlmöglichkeit eines Teilnehmercodes realisierte zusätzliche Freiheitsgrad unter dem Gesichtspunkt der Verbesserung des Fehlerschutzes ausgenutzt wird.

## Patentansprüche

1. Verfahren zum Erzeugen eines kanal- und teilnehmercodierten Nachrichtensignals in einem Sender (S), insbesondere Mobilfunksender,
- mit einer Codiereinrichtung (COD), die ein durch eine Folge von Datensymbolen repräsentiertes Nachrichtensignal entgegennimmt, das entgegengenommene Nachrichtensignal mit einem Kanalcode kanalcodiert und mit einem aus mehreren verfügbaren als CDMA-Spreizcodes ausgeführten Teilnehmercodes ausgewählten, bestimmten Teilnehmercode (C) in Form einer CDMA-Spreizcodierung teilnehmercodiert, und die ein zu übertragendes kanal- und teilnehmercodiertes Nachrichtensignal ausgibt,
**dadurch gekennzeichnet,**
- **daß** derjenige Teilnehmercode (C) ausgewählt wird, welcher einem aus dem Kanalcode und dem ausgewählten, bestimmten Teilnehmercode (C) gebildeten Gesamtcode zugeordnet ist, wobei der Gesamtcode eine maximale Hammingdistanz aufweist.

2. Verfahren nach Anspruch 1,
**dadurch gekennzeichnet,**
- **daß** der Kanalcodierer (KC) Kanalcodes mit variabler Coderate R erzeugen kann, und
- **daß** die Auswahl des bestimmten Teilnehmercodes (C) und der Coderate R des eingesetzten Kanalcodes so getroffen wird, daß die Hammingdistanz des aus Kanalcode und Teilnehmercode gebildeten Gesamtcode maximal ist.

3. Verfahren nach Anspruch 1,
**dadurch gekennzeichnet,**
- **daß** der Kanalcodierer (KC) unterschiedliche Codearten, insbesondere Blockcodes, Faltungscodes, parallel oder seriell verkettete Faltungs- und/oder Blockcodes und Turbo-Codes erzeugen kann, und
- **daß** die Auswahl des bestimmten Teilnehmercodes (C) und der Codeart des eingesetzten Kanalcodes so getroffen wird, daß die Hammingdistanz des aus Kanalcode und Teilnehmercode gebildeten Gesamtcode maximal ist.

4. Verfahren nach Anspruch 1,
**dadurch gekennzeichnet,**
- **daß** die Auswahl des bestimmten Teilnehmercodes (C) in Abhängigkeit von dem zu übertragenden Dienst erfolgt.

5. Verfahren nach einem der vorhergehenden Ansprüche,
**dadurch gekennzeichnet,**
- **daß** als Teilnehmercodierung eine DS-CDMA-Spreizcodierung eingesetzt wird.

6. Verfahren nach einem der Ansprüche 1 bis 4,
**dadurch gekennzeichnet,**
- **daß** als Teilnehmercodierung eine MC-CDMA-Spreizcodierung eingesetzt wird.

7. Einrichtung zum Erzeugen eines kanal- und teilnehmercodierten Nachrichtensignals in einem Sender, insbesondere Mobilfunksender,
- mit einer Codiereinrichtung (COD), die ein durch eine Folge von Datensymbolen repräsentiertes Nachrichtensignal entgegennimmt und ein zu übertragendes, kanal- und teilnehmercodiertes Nachrichtensignal ausgibt, wobei die Codiereinrichtung (COD)
-- einen Kanalcodierer (KC), der das Nachrichtensignal mit einem Kanalcode kanalcodiert, und
-- einen Teilnehmercodierer (SC), der das Nachrichtensignal mit einem aus mehreren verfügbaren als CDMA-Spreizcodes ausgeführten Teilnehmercodes ausgewählten, bestimmten Teilnehmercode in Form einer CDMA-Spreizcodierung teilnehmercodiert,
enthält, und
- mit einer Steuereinheit (SES), welche den bestimmten Teilnehmercode (C) aus der Menge der verfügbaren Teilnehmercodes auswählt,
**dadurch gekennzeichnet,**
- **daß** die Steuereinheit (SES) derartig ausgestaltet ist, dass derjenige bestimmte Teilnehmercode (C) aus den verfügbaren Teilnehmercodes ausgewählt wird, welcher einem aus dem Kanalcode und dem ausgewählten Teilnehmercode (C) gebildeten Gesamtcode zugeordnet ist, wobei der Gesamtcode eine maximale Hammingdistanz aufweist.

8. Einrichtung nach Anspruch 7,
**dadurch gekennzeichnet,**
- **daß** der Kanalcodierer (KC) derart ausgestaltet ist, daß dieser einen Kanalcode mit variabler Coderate (R) und/oder variabler Codeart erzeugen kann, und
- **daß** die Steuereinheit (SES) derart ausgestaltet ist, daß diese diejenige bestimmte Coderate (R) und/oder bestimmte Codeart eines bestimmten Kanalcodes auswählt, welche dem aus dem bestimmten Kanalcode und dem ausgewählten Teilnehmercode (C) gebildeten Gesamtcode zugeordnet sind, wobei der Gesamtcode eine maximale Hammingdistanz aufweist, und
- **daß** der Kanalkodierer (KC) mit demjenigen Kanalcode kanalcodiert, welcher die bestimmte Coderate (R) und/oder die bestimmte Codeart aufweist.

## Claims

1. Method for generating a channel- and subscriber-coded information signal in a transmitter (S), particularly a mobile radio transmitter,
- comprising a coding device (COD) which receives an information signal represented by a sequence of data symbols, channel-codes the received information signal with a channel code and subscriber-codes the received information signal with a particular subscriber code (C) selected from a number of available subscriber codes produced as CDMA spread-spectrum code in the form of CDMA spread-spectrum coding, and which outputs a channel- and subscriber-coded information signal to be transmitted, **characterized in that**
- the subscriber code (C) is selected which is allocated an overall code formed of the channel code and the particular selected subscriber code (C), the overall code exhibiting a maximum hamming distance.

2. Method according to Claim 1, **characterized in that**
- the channel coder (KC) can generate channel codes with variable code rate (R), and that
- the selection of the particular subscriber code (C) and of the code rate (R) of the channel code used is made in such a manner that the hamming distance of the overall code formed from channel code and subscriber code is maximum.

3. Method according to Claim 1, **characterized in that**
- the channel coder (KC) can generate different types of code, particularly block codes, convolutional codes, parallel or serial concatenated convolutional and/or block codes and turbo codes, and that
- the selection of the particular subscriber code (C) and of the type of code of the channel code used is made in such a manner that the hamming distance of the overall code formed of channel code and of subscriber code is maximum.

4. Method according to Claim 1, **characterized in that**
- the selection of the particular subscriber code (C) is made in dependence on the service to be transmitted.

5. Method according to one of the preceding claims, **characterized in that**
- a DS-CDMA spread-spectrum coding is used as subscriber coding.

6. Method according to one of Claims 1 to 4, **characterized in that**
- a MC-CDMA spread-spectrum coding is used as subscriber coding.

7. Device for generating a channel- and subscriber-coded information signal in a transmitter, particularly a mobile radio transmitter,
- comprising a coding device (COD) which receives an information signal represented by a sequence of data symbols and outputs a channel- and subscriber-coded information signal to be transmitted, the coding device (COD) containing
- - a channel coder (KC) which channel-codes the information signal with a channel code, and
- - a subscriber coder (SC) which subscriber-codes the information signal with a particular subscriber code, selected from a number of available subscriber codes formed as CDMA spread-spectrum codes, in the form of a CDMA spread-spectrum coding, and
- comprising a control unit (SES) which selects the particular subscriber coder (C) from the set of available subscriber codes, **characterized in that**
- the control unit (SES) is constructed in such a manner that from the available subscriber codes, the particular subscriber code (C) is selected which is allocated from an overall code formed from the channel code and the selected subscriber code (C), the overall code having a maximum hamming distance.

8. Device according to Claim 7, **characterized in that**
- the channel coder (KC) is constructed in such a manner that it can generate a channel code with variable code rate (R) and/or variable code type, and that
- the control unit (SES) is constructed in such a manner that it selects the particular code rate (R) and/or particular code type of a particular channel code which are allocated to the overall code formed from the particular channel code and the selected subscriber code (C), the overall code exhibiting a maximum hamming distance, and **in that**
- the channel coder (KC) channel-codes by using the channel code which exhibits the particular code rate (R) and/or the particular code type.

## Revendications

1. Procédé pour produire un signal d'informations à codage de canal et à codage d'abonné dans un émetteur (S), notamment dans un émetteur de radiocommunication mobile,
- avec un dispositif de codage (COD) qui reçoit un signal d'informations représenté par une séquence de symboles de données, qui effectue sur le signal d'informations reçu un codage de canal avec un code de canal et un codage d'abonné sous la forme d'un codage à étalement CDMA avec un code d'abonné particulier (C) sélectionné parmi plusieurs codes d'abonné disponibles réalisés comme des codes d'étalement CDMA et qui fournit un signal d'informations à codage de canal et à codage d'abonné à transmettre,
**caractérisé par le fait que**
- on sélectionne le code d'abonné (C) qui est associé à un code global formé du code de canal et du code d'abonné particulier (C) sélectionné, le code global ayant une distance de Hamming maximale.

2. Procédé selon la revendication 1,
**caractérisé par le fait que**
- le codeur de canal (KC) peut produire des codes de canal avec taux de code variable R, et
- la sélection du code d'abonné particulier (C) et du taux de code R du code de canal utilisé est faite de telle sorte que la distance de Hamming du code global formé du code de canal et du code d'abonné est maximale.

3. Procédé selon la revendication 1,
**caractérisé par le fait que**
- le codeur de canal (KC) peut produire différents types de code, notamment des codes en bloc, des codes de convolution, des codes de convolution et/ou en bloc enchaînés en parallèle ou en série et des turbo-codes, et
- la sélection du code d'abonné particulier (C) et du type du code de canal utilisé est faite de telle sorte que la distance de Hamming du code global formé du code de canal et du code d'abonné est maximale.

4. Procédé selon la revendication 1,
**caractérisé par le fait que**
- la sélection du code d'abonné particulier (C) s'effectue en fonction du service à transmettre.

5. Procédé selon l'une des revendications précédentes,
**caractérisé par le fait que**
- un codage à étalement DS-CDMA est utilisé comme codage d'abonné.

6. Procédé selon l'une des revendications 1 à 4,
**caractérisé par le fait que**
- un codage à étalement MC-CDMA est utilisé comme codage d'abonné.

7. Dispositif pour produire un signal d'informations à codage de canal et à codage d'abonné dans un émetteur, notamment dans un émetteur de radiocommunication mobile,
- avec un dispositif de codage (COD) qui reçoit un signal d'informations représenté par une séquence de symboles de données et qui fournit un signal d'informations à codage de canal et à codage d'abonné à transmettre, le dispositif de codage (COD) contenant
- - un codeur de canal (KC) qui effectue un codage de canal du signal d'informations avec un code de canal, et
- - un codeur d'abonné (SC) qui effectue un codage d'abonné du signal d'informations, sous la forme d'un codage à étalement CDMA, avec un code d'abonné particulier sélectionné parmi plusieurs codes d'abonné disponibles réalisés comme des codes d'étalement CDMA,
- et avec une unité de commande (SES) qui sélectionne le code d'abonné particulier (C) parmi l'ensemble des codes d'abonné disponibles,
**caractérisé par le fait que**
- l'unité de commande (SES) est conçue de manière à sélectionner parmi les codes d'abonné disponibles le code d'abonné particulier (C) qui est associé à un code global formé du code de canal et du code d'abonné sélectionné (C), le code global ayant une distance de Hamming maximale.

8. Dispositif selon la revendication 7,
**caractérisé par le fait que**
- le codeur de canal (KC) est conçu de telle sorte que celui-ci peut produire un code de canal avec taux de code variable (R) et/ou avec type de code variable
- l'unité de commande (SES) est conçue de telle sorte qu'elle sélectionne le taux de code particulier (R) et/ou le type de code particulier d'un code de canal particulier qui sont associés au code global formé du code de canal particulier et du code d'abonné sélectionné (C), le code global ayant une distance de Hamming maximale, et
- le codeur de canal (KC) effectue un codage de canal avec le code de canal qui a le taux de code particulier (R) et/ou le type de code particulier.
